# EUROPEAN PATENT SPECIFICATION

(11) **EP 1 914 911 B1**
(45) Date of publication and mention of the grant of the patent: **05.08.2009**
(21) Application number: 06301069.8
(22) Date of filing: 20.10.2006
(51) Int. Cl.: H04B 10/155, H04B 1/707

(54) **Method and system for indoor communications with optical distribution**
Innenraumkommunikationssystem und Verfahren mit optischer Verteilung
Méthode et système de communications intérieures avec distribution optique

(43) Date of publication of application: 23.04.2008
(73) Proprietor: Alcatel Lucent, 75008 Paris (FR)
(72) Inventor: Hettstedt, Heinz-Dieter, 30916, Isernhagen (DE)
(74) Representative: Korakis-Ménager, Sophie

(56) References cited:
- EP-A- 1 482 662
- EP-A2- 0 782 275
- US-A1- 6 075 808
- US-A1- 2002 118 665
- US-A1- 2006 233 111

## Description

The present invention relates to indoor communication systems, particularly inside buildings and tunnels, comprising an optical distribution network.

Wireless communications systems are becoming an increasingly widespread phenomenon of modern communications. Since many users place an increasing number of cellular calls within buildings or other confined structures, there is a need to achieve high quality indoor coverage.

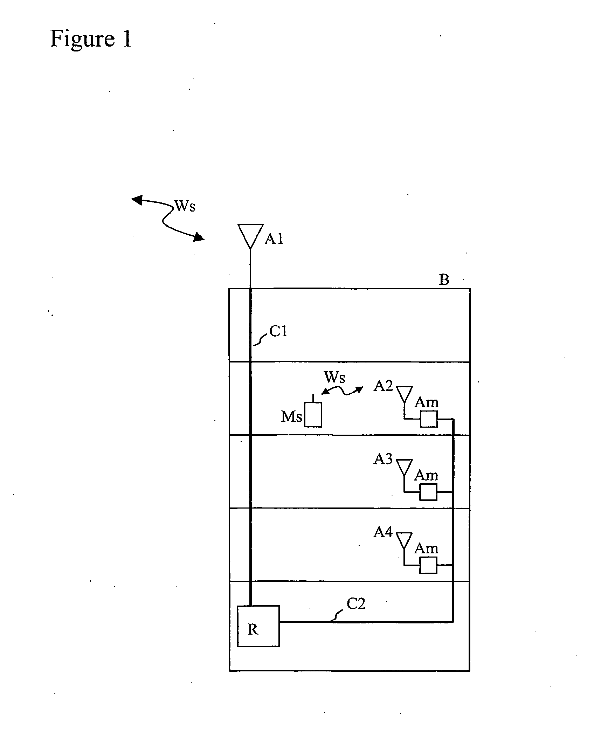

A conventional configuration to extend a wireless communication service e.g. GSM or UMTS, from an outdoor environment to an indoor area is shown in Figure 1 and is characterized by the utilization of a repeater R that is typically located within a building B to retransmit within the building a wireless signal Ws received at an external antenna A1 or retransmit outside the building the wireless signals Ws of mobile stations Ms, e.g. mobile phones, handheld computers and the like, located inside the building B. In the downlink, that is when the wireless signals Ws from the external environment are transmitted to the mobile stations Ms inside the building B, said outdoor wireless signals are passed along a first connection C1 to the repeater R which forwards the signal along a second connection C2 to a plurality of inter-connected amplifiers Am, the amplifiers amplify the signals which are then transmitted over the in-building antennas A2 to A4. In the uplink direction, that is, when the wireless signals Ws from the mobile stations Ms are transmitted to a wireless infrastructure outside the building B, the repeater R receives said signals along connection C2 and transmits them along connection C1 to the external antenna A1.

It is also possible that the repeater R of the indoor communications structure is replaced by a base station connected to a communications core network along connection C1.

Connections C1 and C2 may be a radio frequency (RF) connection or network, e.g. using coaxial cable, an optical connection or network, e.g. using optical fiber, or a high-speed data distribution network such as an Ethernet network, e.g. using a Category 5 cable. The in-building antennas A2 to A4 may also be implemented as RF radiating cables, e.g. this is typically the case when the wireless signals shall be propagated in tunnels.

From US 2002/118665 A1 a system and a method are known, wherein signals generated by a mobile station and received at multiple base transceiver stations are combined utilizing signal processing techniques. Signals received at non target base station transceivers are directed by each non-target base station transceiver to a target base station transceiver, where a combiner is utilized to assemble the received signals into a packet or frame, and to determine if an error condition exists. The error condition of the frame or packet determines whether to utilize base station transceiver power control circuitry to notify the mobile station to adjust the mobile station transmit power up or down.

From US 2006/233111 A1 an arrangement for testing wireless devices and system behavior in the presence of emulated network traffic and emulated fault conditions is known. Thereby, to emulate fault conditions like multi-path and other channel effects in order to disturb communications for test purpose, channel emulation circuitries are used, which comprise analog circuitries modifying a signal in the radio frequency domain. To emulate multi-path effects, an incoming signal is split into at least two sub-signals, then the sub signals are individually attenuated and time delayed before combining them. Further the arrangement comprises additional devices. Disadvantageously the arrangement intends to emulate fault conditions disturbing communications in order to test wireless devices and system behavior instead of improving indoor communications.

From EO 0 782 275 A2 an arrangement for canceling interference jamming in digital radio transmission is known, where severe multi-path fading causes problems by utilizing coded multiplexing with spread spectrum, while maintaining a diversity effect. Advantageously this arrangement does not use a plurality of antennae for canceling interference, even for interference waves having relatively low level providing positive desired to undesired power ratio. Further the arrangement can provide a diversity gain. The arrangement also splits an incoming signal into at least two sub-signals, applies different time delays to the sub-signals, individually spreads the spectrum of the sub-signals and combines the sub-signals with different time delays. Spreading the spectrum of the respective transmitted signals is performed with independent spreading codes in order to reduce bandwidth since jamming can be eliminated by diversity.

From US 6,075,808 an apparatus is known, wherein quadrature-modulated spread spectrum signals of different mutual time delay are combined into a code division multiplex signal in order to minimize cost and equipment size for radio communication. The apparatus comprises first and second diversity branches. The first branch includes a first quadrature modulator connected to a signal source. In the first modulator, the signal is mapped onto a set of complex signals which are respectively modulated onto quadrature carriers at intermediate frequency by means of an in-phase mixer and a quadrature mixer and combined together by a summer to produce a quadrature modulated information-bearing symbol data. The output of the modulator of the first diversity branch is fed into a first scrambler where it is with a first spreading code of pseudorandom sequence to produce a first code division component signal. The second branch is similar to the first branch with the exception that it includes a delay element for providing a predetermined amount of delay to the symbol data. The delayed symbol is modulated onto the intermediate frequency quadrature carriers by a second modulator and spread with a second spreading code in a second scrambler to produce a second code division component signal. The outputs of the first and second scrambler are combined together to produce a code division multiplex signal.

The object of the present is to provide a method and a system for indoor communications which improves the quality of the wireless indoor service coverage.

The object is achieved by a method for indoor communications according to claim 1 and/or 2, a multi-path arrangement according to claim 3, a transmitting or receiving unit according to claim 6, an optical network according to claim 7 and an indoor communications system according to claim 8.

The basic idea behind the invention arises from the observation that in indoor or confined environments the multi-path time delay of the radio signals reaching or transmitted by a mobile station is shorter than the minimum needed for a rake receiver of a mobile station or a base station to work properly i.e. at least one chip length (e.g. 260 ns for UMTS). In such cases then there is no benefit from the technical advantages of the rake receivers, already present in the mobile stations and base stations, in order to achieve improved reception i.e. a rake receiver shows a higher Signal to Noise Ratio (SNR) in a multi-path environment than in an environment without multi-path effects. With the present solution, optimum outdoor multi-path propagation effects are emulated in indoor "clean" environments (locations where the overall differential time delay of radio signals due to multi-path propagation is shorter than 1 chip length). The method and system for indoor communications according to the invention allows the generation of signals having multi-path time delays of at least one chip length. According to the invention, combining a plurality of substantially identical sub-signals showing different time delays between them of at least one chip length, generates a new signal showing a behavior similar to a radio signal in an outdoor multi-path environment.

The solution can be applicable for indoor downlink or uplink transmission or both for indoor downlink and uplink transmission. For signal uplink direction, that is from mobile station to the base station, it is advantageous that the rake receiver of the base station receives signals with multi-path delays greater than 1 chip length, and for signal downlink direction, that is from the base station to the mobile station, it is advantageous that the rake receiver of the mobile station receives signals with multi-path delays greater than 1 chip length.

According to the present invention, the solution is preferably adapted for transmission of signals to and from a mobile station located in a confined area, such as a building or a tunnel, using at least an optical transmission network. The system for indoor communications according to the invention comprises an optical network for distribution of signals between a base station and an optical remote unit which provides the signals to an indoor antenna or a radiating cable. The optical remote units comprise electro-optical and opto-electrical transmitting or receiving means for transmitting or receiving the optical signals along the optical distribution network.

The optical network according to the invention is used advantageously to improve the service performance for radio communications into buildings and tunnels which do not provide system conditions sufficient to benefit from the rake receivers of mobile stations or base stations using, for example, CDMA or UMTS communication technology.

An embodiment example of the invention is now explained with the aid of Figures 1 to 4.

Figure 1 shows a conventional indoor communications system structure.

Figure 2 shows an example structure of an indoor communications system according to the invention.

Figures 3 A, B show exemplary details of an indoor communications system according to the invention.

Figure 4 shows a multi-path arrangement according to the invention.

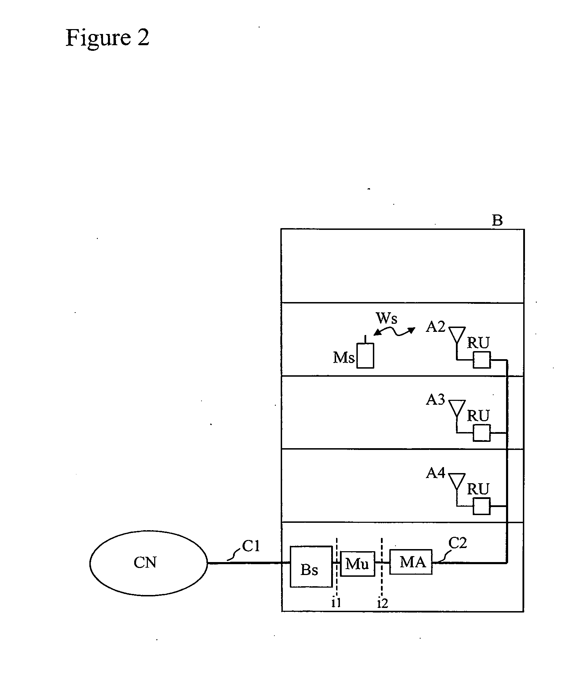

An example of an indoor communications system structure according to the invention, located in a building B, is shown in Figure 2, comprising a base station Bs, a master unit Mu, a multi-path arrangement MA, interface connections I1 and i2, an optical network C2, three optical remote units RU and three in-building antennas A2 to A4. The base station Bs is connected to a core network CN along a first connection network C1 and the indoor antennas A2 to A4 send and receive radio signals Ws to/from a mobile station Ms.

In the downlink direction, communications core network CN signals intended for the mobile station Ms are received by the base station Bs along connection C1. Said signals are then passed through a first connection interface i1, e.g. an RF or digital interface, to the master unit Mu in charge of adapting the signals received from the base station Bs to optical form and forward them through a second connection interface i2 to the optical network C2 for distribution. The optical network comprises the multi-path arrangement MA where the optical signals are split into at least two substantially identical optical sub-signals, a different time delay is applied to each individual optical sub-signal so that the at least two substantially identical optical sub-signals have a time delay difference of at least 1 chip length, and subsequently the optical sub-signals are combined. Said combined signals at the output of the multi-path arrangement MA are distributed to the optical remote units RU, which adapt the received optical signal, e.g. with the use of an opto-electrical converter and/or an opto-electrical amplifier, for transmission through the in-building antennas A2 to A4. Since the in-building antennas transmit this new radio signal showing multi-path effects, the performance of rake receivers within the mobile stations of the building is optimized and the quality of reception in such an environment is improved.

In the uplink direction, radio signals Ws transmitted by the mobile station Ms located inside the building B are received by the in-building antenna A2 and passed to the optical remote unit RU, which adapts the signals, e.g. with the use of an electro-optical converter and/or an electro-optical amplifier, for transmission through the optical connection C2 to the multi-path arrangement MA. According to the invention, in the multi-path arrangement, said optical signals are split into at least two substantially identical optical sub-signals, a different time delay is applied to each individual optical sub-signal so that the at least two substantially identical optical sub-signals have a time delay difference of at least 1 chip length, and subsequently the optical sub-signals are combined. Said combined signals at the output of the multi-path arrangement MA are passed through the second connection interface i2 to the master unit Mu in charge of adapting the signals received from the optical network C2 for transmission through the first connection interface, e.g. RF or digital interface, to the base station Bs. The base station provides said signals, in appropriate form, to a rake receiver within the base station which is in charge of processing the multi-path signal components and obtain the transmitted mobile station signal. Said signal is then forwarded to the communications core network CN. By emulating multi-path effects in the signals received from the mobile stations located in environments that are free of multi-path effects, the performance of the rake receiver within the base station is optimized and the reception performance in uplink direction is improved.

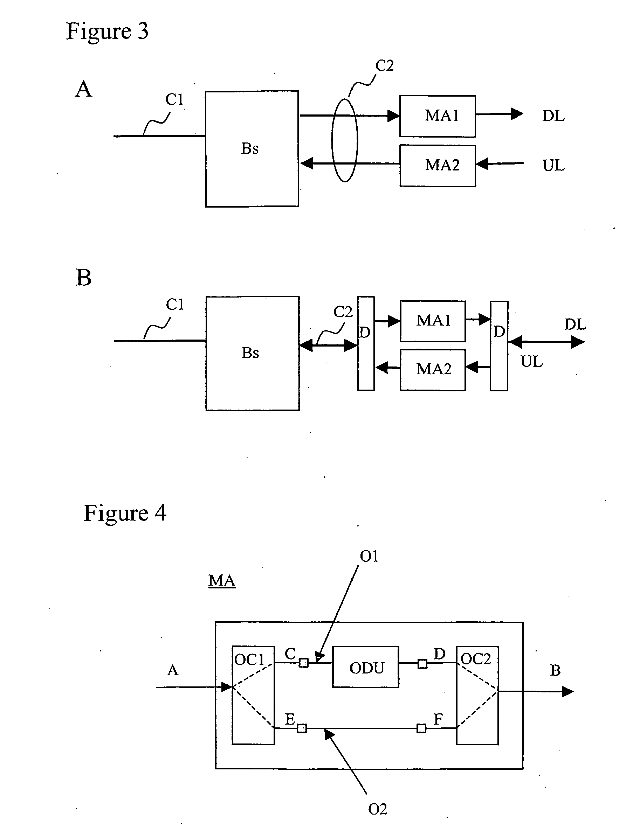

Figure 3A shows a first exemplary detail of an indoor communications system according to the invention comprising a first connections network C1, a base station Bs, an optical network C2 and two multi-path arrangements MA1 and MA2, the first used for downlink transmission DL and the second used for uplink transmission UL.

Figure 3B shows also another way of using two multi-path arrangements MA1 and MA2 with only one optical line for both downlink DL and uplink transmission UL. In order to distinguishing the optical uplink signal from the optical downlink signal wavelength multiplex access (WDMA) is applied, and a diplexer D is in charge separating the uplink and downlink optical signals.

Figure 4 shows an example of a multi-path arrangement MA according to the invention for an optical network, comprising an optical signal input port A, an optical signal output port B, two optical transmission lines O1 and O2, two optical couplers OC1 and OC2, nodes C,D, E and F, and an optical delay unit ODU.

The optical signal input A is connected to the first optical coupler OC1 which splits an incoming optical signal in two substantially identical optical sub-signals and outputs them in nodes C and E. A first optical transmission line O1 is connected between output node C of the first optical coupler OC1 and input node D of the second optical coupler OC2. A second optical transmission line O2 is connected between output node E of the first optical coupler OC1 and input node F of the second optical coupler OC2. An optical delay unit ODU is arranged in the first optical transmission line O1. The second optical coupler OC2 combines the two incoming optical sub-signals into a single optical signal at output port B.

The first optical coupler OC1 splits an incoming optical signal that is fed in input port A into two substantially identical sub-signals. Those two optical sub-signals take two different signal paths ACDB and AEFB. The signal path ACDB introduces a time delay of at least one chip length, e.g. at least 260 ns for UMTS, to that optical sub-signal. The second optical coupler OC2 combines the two sub-signals after passing through their individual signal paths ACDB and AEFB to a new optical output signal showing a behavior similar to a signal in a multi-path environment.

Although Figure 4 shows an arrangement with only two signal paths, it is possible to implement a multi-path arrangement MA comprising more than two signal paths. Then, the preferred condition is that each signal path "n" comprises a time delay of at least a multiple of the chip length ("n x chip length", n = 0,1,2, ...), that is, the individual signal paths provide time delays of zero, one, two, three etc. chip lengths. An incoming signal is then split into a number "n+1" of substantially identical optical sub-signals equal to the number of signal paths. After the sub-signals have passed through their individual signal paths they are combined to a new signal at output port B showing multi-path effects, that is showing a behavior similar to a radio signal received in an outdoor multi-path environment. The new combined signal comprises the necessary characteristics needed for the rake receivers present in mobile stations and base stations to demodulate this signal. This enables the activation of the so-called rake effect providing a higher SNR in receivers of node base stations and mobile phones.

The optical delay unit ODU preferably is an optical fiber of appropriate physical length. It is also possible that the optical delay unit ODU is implemented as being the first optical transmission line O1 with the appropriate physical length. The optical delay unit ODU can also be implemented by any other known means and providing a variable and adjustable time delay.

For the sake of generalization, it is understood for a person skilled in the art that since the multi-path arrangement MA is a reciprocal passive device, its transmission characteristics are identical in both port directions AB - BA. It is also understood that although presented in the figures as a standalone arrangement of the optical transmission network of the indoor communications system said functionality can also be implemented inside the optical repeater or the master unit of the indoor communications system.

## Claims

1. Method for indoor communications, the method comprising
a base station (Bs) receiving a signal intended for a mobile station (Ms) located inside a confined environment (B),
the base station passing said signal to a master unit (Mu) which converts the signal into an optical signal for transmission through an optical network (C2),
the optical network (C2) distributing said optical signal to at least one optical remote unit (RU), which converts the optical signal into an electrical signal for transmission through wireless transmission means (A2 to A4),
the mobile station (Ms) receiving the signal transmitted by the wireless transmission means (A2 to A4) and providing said signal to a rake receiver within the mobile station (MS), the method **characterized by**
within the optical network (C2)
in a multi-path arrangement (MA), splitting the optical signal into at least two identical optical sub-signals, applying a different time delay to each individual optical sub-signal so that the time delay difference between the optical sub-signals is at least one chip length, and combining the at least two optical sub-signals with different time delays.

2. Method for indoor communications, the method comprising.
a wireless reception means (A2 to A4) receiving a radio signal from a mobile station (Ms) located inside a confined environment (B),
the wireless reception means passing the received radio signal to an optical remote unit (RU) which converts the radio signal into an optical signal for transmission through an optical network (C2),
the optical network (C2) passing said optical signal to a master unit (Mu), which adapts the received optical signal for reception by a base station (Bs),
providing the received signal to a rake receiver within the base station (BS), the method **characterized by**
within the optical network (C2)
in a multi-path arrangement (MA), splitting the optical signal into at least two identical optical sub-signals, applying a different time delay to each individual optical sub-signal so that the time delay difference between the optical sub-signals is at least one chip length, and combining the at least two optical sub-signals with different time delays.

3. Communication system extending wireless communications from an outdoor environment to a confined indoor environment (B), the communication system comprising:
in the downlink direction
- Means (Bs) for receiving a signal intended for a mobile station (Ms) located inside a confined environment (B),
- Means to pass said signal from said base station (Bs) to a master unit (Mu) and to convert the signal into an optical signal for transmission through an optical network (C2),
- Means to distribute said optical signal by the optical network to at least one optical remote unit (RU), which is adapted to convert the optical signal into an electrical signal for transmission through a wireless transmission means (A2 to A4),
- Means to receive the signal transmitted by the wireless transmission means (A2 to A4) by the mobile station (Ms) and to provide said signal to a rake receiver within the mobile station (MS); and
in the uplink direction
- a wireless reception means (A2 to A4) to receive a radio signal from a mobile station (Ms),
- means to pass said received radio signal from said wireless reception means (A2 to A4) to at least one optical remote unit (RU), and to convert the signal into an optical signal for transmission through an optical network (C2),
- means to pass said optical signal by the optical network to a master unit (Mu), and to adapt the optical signal for reception by a base station (Bs), and
- means to provide said adapted signal to a rake receiver within the base station (Bs).
the communication system is **characterized by** within the optical network (C2)
- means (MA, OC1, OC2) to split the optical signal into at least two identical optical sub-signals,
- means (MA, O1, O2, ODU) to apply a different time delay to each individual optical sub-signal so that the time delay difference between the optical sub-signals is at least one chip length, and
- means (MA, OC2, OC1) to combine the at least two optical sub-signals with different time delays in order to generate an optical signal showing multi-path attributes and thus to improve wireless indoor communications with a base and/or mobile station (Ms) comprising a rake-receiver.

## Patentansprüche

1. Verfahren für Innenraumkommunikation, wobei das Verfahren die folgenden Schritte umfasst:
Eine Basisstation (Bs) empfängt ein für eine sich innerhalb einer geschlossenen Umgebung (B) befindliche Mobilstation (Ms) bestimmtes Signal,
die Basisstation leitet das besagte Signal an eine Master-Einheit (Mu) weiter, welche das Signal für die Übertragung über ein optisches Netzwerk (C2) in ein optisches Signal umwandelt,
das optische Netzwerk (C2) verteilt das besagte optische Signal an mindestens eine entfernte optische Einheit (RU), welche das optische Signal für die Übertragung über drahtlose Übertragungsmittel (A2 bis A4) in ein elektrisches Signal umwandelt,
die Mobilstation (Ms) empfängt das von den drahtlosen Übertragungsmitteln (A2 bis A4) übertragene Signal und stellt das besagte Signal für einen Rake-Empfänger innerhalb der Mobil station (Ms) bereit,
wobei das Verfahren **gekennzeichnet ist durch**,
innerhalb des optischen Netzwerks (C2),
in einer Mehrpfad-Anordnung (MA). Splitten des optischen Signals in mindestens zwei identische optische Teilsignale unter Anwendung einer verschiedenen Zeitverzögerung auf jedes individuelle optische Teilsignal, so dass die Zeitverzögerungsdifferenz zwischen den optischen Teilsignalen mindestens eine Chiplänge beträgt, und Kombinieren der mindestens zwei optischen Teilsignale mit verschiedenen Zeitverzögerungen.

2. Verfahren für Innenraumkommunikation, wobei das Verfahren die folgenden Schritte umfasst:
Ein drahtloses Empfangsmittel (A2 bis A4) empfängt ein Funksignal von einer Mobilstation (Ms), welche sich innerhalb einer geschlossenen Umgebung (B) befindet,
das drahtlose Empfangsmittel leitet das empfangene Funksignal an eine entfernte optische Einheit (RU) weiter, welche das Funksignal für die Übertragung über ein optisches Netzwerk (C2) in ein optisches Signal umwandelt,
das optische Netzwerk (C2) leitet das besagte optische Signal an eine Master-Einheit (Mu) weiter, welche das Signal für den Empfang an einer Basisstation (Bs) anpasst,
Bereitstellen des empfangenen Signals für einen Rake-Empfänger innerhalb der Basisstation (Bs),
wobei das Verfahren **gekennzeichnet ist durch**,
innerhalb des optischen Netzwerks (C2),
in einer Mehrpfad-Anordnung (MA), Splitten des optischen Signals in mindestens zwei identische optische Teilsignale unter Anwendung einer verschiedenen Zeitverzögerung auf jedes individuelle optische Teilsignal, so dass die Zeitverzögerungsdifferenz zwischen den optischen Teilsignalen mindestens eine Chiplänge beträgt, und Kombinieren der mindestens zwei optischen Teilsignale mit verschiedenen Zeitverzögerungen.

3. Kommunikationssystem, welches drahtlose Verbindungen von einer Außenraum-Umgebung in eine geschlossene Innenraum-Umgebung (B) ausdehnt, wobei das Kommunikationssystem umfasst:
In der Downlink-Richtung,
- Mittel (Bs) zum Empfangen eines für eine sich innerhalb einer geschlossenen umgebung (B) befindliche Mobilstation (Ms) bestimmten Signals,
- Mittel zum Weiterleiten des besagten Signals von der besagten Basisstation (Bs) an eine Master-Einheit (Mu) und zum Umwandeln des Signals in ein optisches Signal für die Übertragung über ein optisches Netzwerk (C2),
- Mittel zum Verteilen des besagten optischen Signals durch das optische Netzwerk an mindestens eine entfernt optische (RU), welche fähig ist, das optische Signal für die Übertragung über ein drahtloses Übertragungsmittel (A2 bis A4) in ein elektrisches Signal umzuwandeln.
- Mittel zum Empfangen des von dem drahtlosen Übertragungsmittel (A2 bis A4) übertragenen Signals an der Mobilstation (Ms) und zum Bereitstellen des besagten Signal an einen Rake-Empfänger innerhalb der Mobilstation (Ms): und
in der Uplink-Richtung,
- ein drahtloses Empfangsmittel (A2 bis A4) zum Empfangen eines Funksignals von einer Mobilstation (Ms),
- Mittel zum Weiterleiten des besagten empfangenen Funksignals von dem besagten drahtlosen Empfangsmittel (A2 bis A4) an mindestens eine entfernte optische Einheit (RU), und zum Umwandeln des Signals in ein optisches Signals für die Übertragung über ein optisches Netzwerk (CS).
- Mittel zum Weiterleiten des besagten optischen Signals durch das optische Netzwerk an eine Master-Einheit (Mu), und zum Anpassen des optischen Signals für den Empfang an einer Basisstation (Bs), und
Mittel zum Bereitstellen des besagten angepassten Signals an einen Rake-Empfanger innerhalb der Basisstation (Bs),
wobei das Kommunikationssystem **gekennzeichnet ist durch**, innerhalb des optischen Netzwerks (C2):
- Mittel (MA, OC1, OC2) zum Splitten des optische Signals in mindestens zwei identische optische Teilsignale,
- Mittel (MA, O1, O2, ODU) zum Anwenden einer verschiedenen Zeitverzögerung auf jedes individuelle optische Teilsignal, so dass die Zeitvezögorungsdifferenz zwischen den optischen Teilsignalen mindestens eine Chiplänge beträgt, und
- Mittel (MA, OC2, OC1) zum Kombinieren der mindestens zwei optischen Teilsignale mit verschiedenen Zeitveizögerungen, um ein optisches Signal mit Mehrpfad-Attributen zu erzeugen und so die drahtlose Innenraumkommunikation mit einer Basis- und/oder Mobilstation (Ms), welche einen Rake-Empfänger umfassen, zu verbessern.

## Revendications

1. Procédé de communication intérieure, le procédé comprenant
une station de base (Bs) qui reçoit un signal destiné à une station mobile (Ms) se trouvant dans un environnement confiné (B),
la station de base transférant ledit signal à une unité maître (Mu) qui convertit le signal en un signal optique en vue de sa transmission par le biais d'un réseau optique (C2),
le réseau optique (C2) distribuant ledit signal optique à au moins une unité optique distante (RU) qui convertit le signal optique en un signal électrique en vue de son émission par le biais de moyens d'émission sans fil (A2 à A4),
la station mobile (Ms) recevant le signal émis par les moyens d'émission sans fil (A2 à A4) et délivrant ledit signal à un récepteur a ratissage au sein la station mobile (MS),
le procédé étant **caractérisé par**, au sein du réseau optique (C2), dans un arrangement à trajets multiples (MA), le fractionnement du signal optique en au moins deux sous-signaux optiques identiques en appliquant un retard différent à chaque sous-signal optique individuel de sorte que la différence de retard entre les sous-signaux optiques soit au moins égale à la durée d'une période élémentaire, puis combinaison des au moins deux sous-signaux optiques avec des retards différents.

2. Procédé de communication intérieure, le procédé comprenant
des moyens de réception sans fil (A2 à A4) qui reçoivent un signal radioélectrique de la part d'une station mobile (Ms) se trouvant dans un environnement confiné (B),
les moyens de réception sans fil transférant le signal radioélectrique reçu à une unité optique distante (RU) qui convertit le signal radioélectrique en un signal optique en vue de sa transmission par le biais d'un réseau optique (C2),
le réseau optique (C2) transférant ledit signal optique à une unité maître (Mu) qui adapte le signal optique reçu en vue de sa réception par une station de base (Bs),
la délivrance du signal reçu à un récepteur à ratissage au sein de la station de base (BS),
le procédé étant **caractérisé par**, au sein du réseau optique (C2), dans un arrangement à trajets multiples (MA), le fractionnement du signal optique en au moins deux sous-signaux optiques identiques en appliquant un retard différent à chaque sous-signal optique individuel de sorte que la différence de retard entre les sous-signaux optiques soit
au moins égale à la durée d'une période élémentaire, puis des au moins deux sous-signaux optiques avec des retard différents.

3. Système de communication qui étend les communications sans fil d'un environnement extérieur à un environnement intérieur confiné (B), le système de communication comprenant, dans le sens de la raison descendante.
- des moyens (bis) pour recevoir un signal destiné à une station mobile (Ms) se trouvant à l'intérieur d'un environnement confiné (B),
- des moyens pour transférer ledit signal de ladite station de base (Bs) à une unité maître (Mu) et pour convertir le signal en un signal optique en vue de sa transmission par le biais d'un réseau optique (C2),
- des moyens pour distribuer ledit signal optique avec le réseau optique à au moins une unité distante (RU) qui est adaptée pour convertir le signal optique en un signal électrique en vue de son émission par le biais de moyens d'émission sans fil (A2 à A4),
- des moyens pour recevoir le signal émis par les moyens s'émission sans fil (A2 à A4) par la station mobile (Ms) et pour délivreur ledit signal à un récepteur à ratissage au sein de la station mobile (MS) ; et, dans le sens de la liaison montante,
- des moyens de réception sans fil (A2 à A4) pour recevoir un signal radioélectrique de la part d'une station mobile (Ms),
- des moyens pour transférer ledit signal radioélectrique reçu desdits moyens de réception sans fil (A2 à A4) à au moins une unité optique distante (RU) et pour convertir le signal en un signal optique en vue de sa transmission par le biais d'un réseau optique (C2),
- des moyens pour transférer ledit signal optique à une unité maître (Mu) par le réseau optique et pour adapter te signal optique reçu en vue de sa réception par une station de base (Bs), et
- des moyens pour délivrer ledit signal adapte à un récepteur a ratissage au sein de la station de base (Bs),
le système de communication étant **caractérisé par**, au sein du réseau optique (C2),
- des moyens (MA, OC1, OC2) pour fractionner le signal optique en au moins deux sous-signaux identiques,
- des moyens (MA, 01. 02, ODU) pour appliquer un retard différent à chaque sous-signal optique individuel de sorte que la différence de retard entre les sous-signaux optiques soit au moins égale à la durée d'une période élèmentaire et
- des moyens (MA, OC2, OC1) pour combiner lesdits au moins deux sous-Signaux optiques avec des retards différents afin de générer un signal optique qui présenté des attributs de trajets multiples et ainsi pour améliorer les communications intérieure sans fil avec une station de base et/ou mobile (Ms) comprenant précepteur à ratissage.
